Europäisches Patentamt

European Patent Office

Office européen des brevets

(19)

(11) Publication number: **0 235 993**
**A1**

(12) # EUROPEAN PATENT APPLICATION

(21) Application number: **87301292.6**

(22) Date of filing: **13.02.87**

(51) Int. Cl.⁴: **B 60 R 1/08**

(30) Priority: **13.02.86 GB 8603559**

(43) Date of publication of application: **09.09.87**
**Bulletin 87/37**

(84) Designated Contracting States: **AT BE CH DE ES FR GB GR IT LI LU NL SE**

(71) Applicant: **Yang, Tai-Her, 5-1 Taipin Street, Si-Hu Town Dzan-Hwa (TW)**

(72) Inventor: **Yang, Tai-Her, 5-1 Taipin Street, Si-Hu Town Dzan-Hwa (TW)**

(74) Representative: **Arthur, Bryan Edward et al, Withers & Rogers 4 Dyer's Buildings Holborn, London EC1N 2JT (GB)**

(54) **Vehicle mirrors.**

(57) The invention comprises a mirror which affords a view from the rear of a vehicle (A) to the driving position of the vehicle by rearview mirror means (M1, M2) mounted on the tail end of the vehicle, having a mirror inclined so as to reflect light from the side of the rear of the vehicle or behind the rear of the vehicle to the front of the vehicle. This overcomes problems caused by being unable to see round corners when reversing and of the blind spot of the interior rearview mirror. The rear face of the rearview mirror means may be provided with light-reflective means (5) or an auxiliary brake light (5).

EP 0 235 993 A1

## VEHICLE MIRRORS

This invention relates to mirrors for vehicles, for example road vehicles.

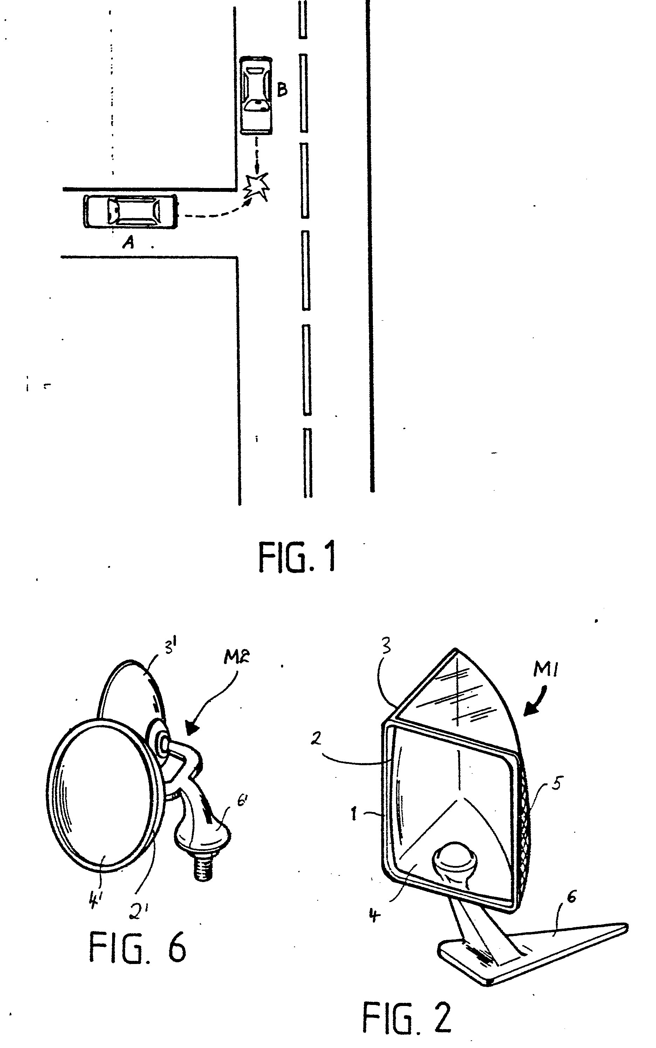

Referring to Figure 1, when a road vehicle A is reversed such as around a corner, for example from a minor road into a major road or out of a driveway into a road, or round an obstruction such as a tree or other vehicle while parking, the driver may make observations to the rear of the vehicle by looking in the interior rearview mirror on or above the windscreen of the vehicle or an external front wing or side mirror or by turned round. However, the scope of lateral vision is confined approximately to the width of the vehicle and the driver is blind to the view of any hidden object, such as a vehicle parked round the corner or any activity such as a pedestrian or approaching traffic B, beyond this scope of vision until he has reversed the necessary distance to be able to see the previously unavailable scope of vision out of the side windows of the vehicle.

This can be dangerous because the driver is unable to assess whether it is safe to reverse at all or to continue reversing. The problem is serious because the driver is unable to assess whether it is safe to reverse at all or to continue reversing. The problem is serious because the distance between the driver and the earliest position in which he can see into the originally unavailable scope of vision is so great, often more than half the length of the vehicle from the rear of the vehicle, that the vehicle would project a long way out into the major road in this position. This problem is even more serious for large vehicles such as lorries, buses or coaches.

In practice, the driver turns round the obstruction or the corner and reverses at the same time but the driver

- 2 -

0235993

is then unable to see into the originally unavailable scope of vision until he has actually manoeuvred round the corner or obstruction. It is necessary for the driver to be highly vigilant and constantly observe the changing field of view behind the vehicle and reverse with caution, being prepared to stop at any time in case of causing or experiencing danger. This, however, is not always possible for instance if the driver has to reverse into a continuous stream of oncoming vehicles: in this case, the driver must reverse as quickly as possible and then change into forward gear as well as move onto the correct side of the road if necessary.

The problem of the unavailable view can be partially alleviated by the driver turning his head to look through the back or side window of the vehicle. However, this results in the driver's attention being diverted from the view and hence any changing circumstances forwardly of the vehicle as well as from the actual driving procedure. This further problem occurs not only in reversing the vehicle but also in normal forward travel. The unavailable view laterally of the rear and behind the rear of the vehicle is hazardous for example when the vehicle is being overtaken because the overtaking vehicle cannot be seen for a period between being visible in the interior rearview mirror and in the driving side wing on side mirror. This also occurs when the vehicle is setting off from a stationary position, especially if joining a forward traffic flow, when it is essential for the driver to turn to look over his shoulder for any oncoming traffic which might be so close as not to be visible in the interior rearview mirror. Similar problems may arise in marine craft.

It is a principal object of the invention to overcome the aforementioned problems of vehicles and to thereby lessen the danger due to the poor field of view at the rear of

0235993

the vehicle. The problems related above are exacerbated in conditions of poor visibility such as fog or snow or darkness.

A solution is proposed according to the invention which provides a vehicle characterised by a mirror means on the rear of the vehicle, the mirror means being oriented in or capable of being oriented into a position for reflecting a view laterally of either or both of the rear or behind the rear of the vehicle to an image receiving position at the front of the vehicle. A mirror may also be provided positioned forwardly of the driving position of the vehicle for reflecting the image received at the front of the vehicle to the driving position to save the driver from having to turn round to look in the rear mirror means.

The rear mirror principle may be applied to new or existing vehicles, such as a motor vehicle, and there is also provided according to another aspect of the invention a mirror system for a vehicle comprising a first carrier member for attachment to a tail end of a vehicle, a first mirror means supported by the first carrier member, a second carrier member for attachment to a position forwardly of the driving position of the vehicle, and a second mirror means supported by the second carrier member for reflecting the image received from the rear first mirror to the driving position.

Thus, according to the invention the driver of the vehicle is afforded a view from the rear of the vehicle, which substantially reduces the risk of an accident involving the vehicle.

According to another aspect of the invention there is advantageously provided mirror means in the form of a mirror-carrying unit on the rear of a vehicle, characterised in that it comprises a support having two mutually-inclined mirrors, and means for mounting the support on the rear of a said vehicle with the mutually-inclined mirrors facing the front of the

- 4 -

0235993

vehicle. The mutually-inclined sides are best oriented with respect to one another so that the angles of incidence of the required field of view is equal to the angles of required reflection to the desired receiving position at the front of the vehicle.

Means may be included for changing the inclination of the mirror means, which may be operable by hand or by a control at or near the driving position in the vehicle. The control may actuate an electrically- operable, hydraulically-operable, or mechanically-operable-cable orientation system.

If a single mirror or mirror-carrying unit is employed, it is preferred that this is disposed transversely centrally or approximately transversely centrally of the rear of the vehicle. Alternatively the mirror or unit may be on the same side of the vehicle as the driving position.

A plurality of mirrors or mirror-carrying units may be employed. For example, one mirror-carrying unit may be disposed at each side of the vehicle rear to maximise the views available to the driver.

Advantageously, the mirror-carrying unit may have a rear third side joining the two mutually-inclined sides, and light-reflective or light-emitting means carried on the third side of the body, for instance an auxiliary brake light, to inform following vehicles of the presence of the vehicle. This is especially useful in the dark or in bad weather conditions, such as fog or falling snow, causing poor visibility since following vehicles are better able to assess their distance from the vehicle in front. The third side of the mirror-carrying unit may be convex.

The term "mirror" is used throughout this specification to include all types of reflective elements and is not restricted to a sheet of glass having a reflective coating. The mirrors may be planar or convex.

Embodiments of the invention are now described by way of example, with reference to the drawings, in which:

Figure 1 is a diagram showing a vehicle A reversing round a corner and a vehicle B proceeding forwardly;

Figure 2 shows a rearview mirror-carrying unit according to one embodiment;

Figures 3 to 5 show vehicles on which rearview mirror-carrying units are mounted according to the invention; and

Figure 6 shows an alternative mirror-carrying unit.

A mirror-carrying unit M1, as shown in Figure 2, has a single mirror-carrying body 1, which has an approximately triangular cross section. Two planar external sides 2,3 each carry a mirror 4, these mirrors providing views in opposite directions. The third external side of the body 1 is slightly convex and carries a reflective surface 5 or extra brake light 5. The body 1 is to be mounted on the rear of a vehicle A by a fixed support member 6 on which the body is pivotable for changing the inclination of the mirrored sides 2,3 with respect to the vehicle A to provide the required lateral views to the driving position at the front of the vehicle A.

An alternative mirror-carrying unit M2, as shown in Figure 6, consists of a double-limbed support member 6' which is fixed to the vehicle A. Each limb of the support member 6 is pivotally attached to a base 2',3', each of which carries a mirror 4'. Hence each mirror can be pivoted to the position of inclination appropriate to provide the required lateral views to the driving position at the front F of the vehicle A.

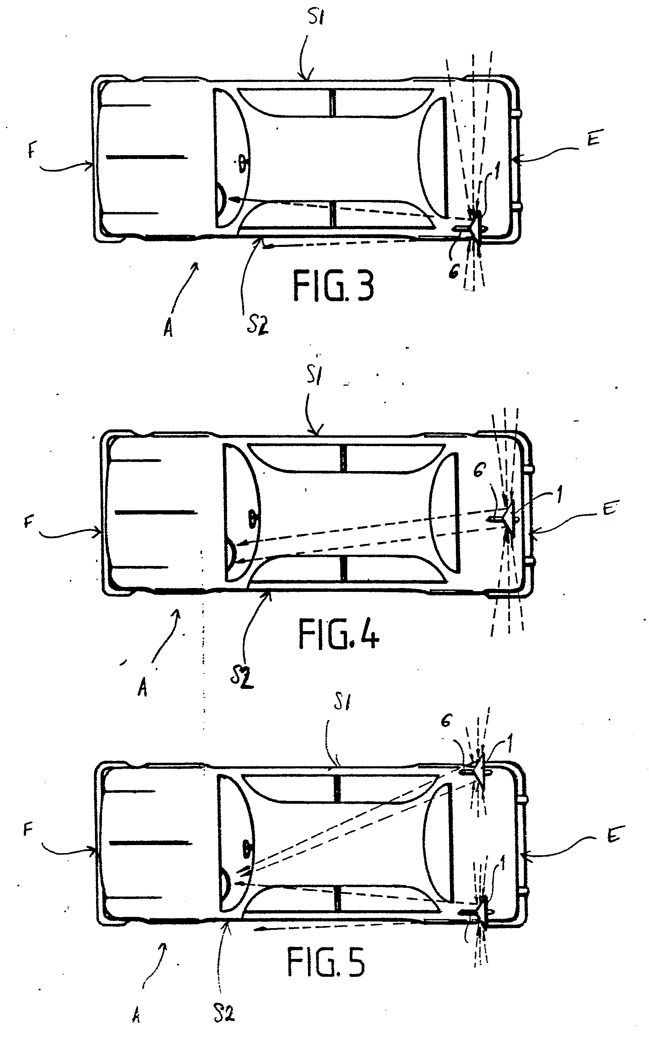

A mirror-carrying unit M1,M2 as just described may be mounted on the tail-end E of a vehicle A. Figure 3 shows a unit mounted on the same side of the vehicle as the driving position, Figure 4 shows a unit mounted transversely centrally, and Figure 5 shows two units, one on each side S1,S2 of the vehicle. Each unit is mounted with the mirror sides 2,3; 2',3', facing forwardly and the third side facing rearwardly of the vehicle.

Light from each side of the vehicle is reflected by each mirror of each unit, indicated by the broken lines in the drawing, to the driving position D in the vehicle.

An extra mirror (not shown) may advantageously be provided at the front of the vehicle, conveniently on the interior side of the windscreen or just above, to reflect the images reflected from the mirror units into the eyes of the driver in the driving position. Otherwise a normal interior rearview mirror may be used for this purpose or the driver may see the reflected images upon looking round towards the mirror unit or units at the rear of the vehicle A.

The mirror unit or units thus provide reflect views from the regions to the sides of the rear of the vehicle as shown. Mirror means may be employed at an inclination to reflect a view to the side of behind the rear of the vehicle. The rearwardly-facing reflective surface 5 or brake light 5 are seen from behind the vehicle by following traffic. This is useful in conditions of poor visibility.

0235993

It may also be appreciated that the support for the mirror means may be provided moulded into a rear accessory to the vehicle such as a windspoil.

CLAIMS

1.      A mirror-carrying unit (M1;M2) on the rear of a vehicle (A), characterised in that it comprises a support (6;6') having two mutually-inclined mirrors (4;4'), and means for mounting the support on the rear of a said vehicle with the mutually-inclined mirrors facing the front of the vehicle.

2.      A unit according to Claim 1, including means for changing the inclination of the mirrors with respect to the vehicle.

3.      A unit according to Claim 1 or 2, wherein the support comprises a single body (1) having two-mutually inclined adjacent sides (2,3) and a mirror carried on each side.

4.      A unit according to Claim 3, wherein the body has a rear third side joining the two mutually-inclined sides, and light-reflective (5) or light-emitting means (5) carried on the third side of the body (1).

5.      A vehicle (A) characterised by a mirror means (M1;M2) on the rear (E) of the vehicle, the mirror means being oriented in or capable of being oriented into a position for reflecting a view laterally of either or both of the rear or behind the rear of the vehicle to an image receiving position at the front (F) of the vehicle.

6.      A vehicle according to Claim 5, comprising a mirror positioned forwardly of the driving position of the vehicle for reflecting the image received from the rear first mirror means to the driving position.

7.      A vehicle according to Claims 5 or 6, wherein the rear mirror means is disposed transversely centrally of the tail end of the vehicle.

8. A vehicle according to Claim 5 or 6, comprising a pair of mirror means one mirror means, disposed at or near each side of the tail end of the vehicle.

9. A vehicle according to any one of Claims 5 to 8, wherein the said mirror means comprises a respective mirror-carrying unit characterised by any one of Claims 1 to 4.

10. A mirror system for a vehicle, characterised in that it comprises a first carrier member (1,6;6') for attachment to a tail end of a vehicle, a first mirror means (4;4') supported by the first carrier member, a second carrier member for attachment to a position forwardly of the driving position of the vehicle, and a second mirror means supported by the second carrier member for reflecting the image received from the rear first mirror to the driving position.

11. A mirror system according to Claim 10, wherein the mirror means comprises a mirror-carrying unit (M1;M2) characterised by any one of Claims 1 to 4.

0235993

FIG. 1

FIG. 6

FIG. 2

FIG. 3

FIG. 4

FIG. 5

0235993

## EUROPEAN SEARCH REPORT

Application number

EP 87 30 1292

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 467 736 (LANGLOIS et al.) * figure 12; page 3, lines 15-21 * | 1,3,5, 6,7,10 | B 60 R 1/08 |
| Y | | 2,4,8, 9,11 | |
| Y | DE-A-2 254 374 (DENKMANN) * page 7, line 22 - page 8, line 9; figure 3 * | 2,9,11 | |
| A | | 1,3,5 | |
| Y | PATENT ABSTRACTS OF JAPAN, vol. 9, no. 202 (M-405)[1925], 20th August 1985; & JP - A - 60 064 048 (SHIYOUICHI TANAKA) 12-04-1985 | 4,9,11 | **TECHNICAL FIELDS SEARCHED (Int. Cl.4)** B 60 R 1/00 |
| A | | 1,3,5 | |
| Y | DE-A-2 707 193 (LEHMANN) * claim 1 * | 8 | |
| X | DE-A-3 023 208 (SCHEFFLER) * figures 1, 2 * | 1,5-7, 10 | |
| | --- -/- | | |

The present search report has been drawn up for all claims

| Place of search | Date of completion of the search | Examiner |
|---|---|---|
| BERLIN | 06-04-1987 | STANDRING M A |

# EUROPEAN SEARCH REPORT

**European Patent Office**

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A |  | 8 |  |
| X | PATENT ABSTRACTS OF JAPAN, vol. 9, no. 307 (M-435)[2030], 4th December 1985; & JP - A - 60 143 156 (MITSUHIRO NISHINO) 29-07-1985 | 1,3,5, 7 |  |
| X | PATENT ABSTRACTS OF JAPAN, vol. 3. no. 108 (M-72)[108], 11th September 1979; & JP - A - 54 083 240 (AISAN KOGYO) 07-03-1979 | 1,5 |  |
| A | BE-A- 880 111 (PETTIAUX) * whole document * | 1 |  |
| A | GB-A-1 581 772 (MALLETT) * figures 1-4; page 3, line 92 - page 4, line 15 * | 1 | **TECHNICAL FIELDS SEARCHED (Int. Cl.4)** |

The present search report has been drawn up for all claims

| Place of search | Date of completion of the search | Examiner |
|---|---|---|
| BERLIN | 06-04-1987 | STANDRING M A |